# EUROPEAN PATENT APPLICATION

(11) **EP 2 397 483 A1**
(43) Date of publication of application: **21.12.2011**
(21) Application number: 10741291.8
(22) Date of filing: 12.02.2010
(51) Int. Cl.: C07G 99/00, A23L 1/212, A23L 3/3472

(54) **PLANT EXTRACT CONTAINING ANTIFREEZE SUBSTANCE AND METHOD FOR PRODUCING SAME**

(30) Priority: 13.02.2009 JP 2009031683; 13.02.2009 JP 2009031684
(71) Applicant: Kaneka Corporation, Osaka-shi, Osaka 530-8288 (JP)
(72) Inventor: ARAI, Naoki, Takasago-shi Hyogo 676-8688 (JP); TOMONO, Jun, Takasago-shi Hyogo 676-8688 (JP); YOKOTA, Shinichi, Takasago-shi Hyogo 676-8688 (JP); TOMINAGA, Yuji, Takasago-shi Hyogo 676-8688 (JP)
(74) Representative: HOFFMANN EITLE
(86) International application number: PCT/JP2010/052073
(87) International publication number: WO 2010/093014

(57) **Abstract**

The objective of the present invention is to provide an antifreeze substance which is suitable for practical use and has excellent antifreeze activity in a safe process flow applicable to food production in a simple, efficient and inexpensive manner. The first method for producing a plant extract containing an antifreeze substance according to the present invention comprises the steps of drying a plant containing the antifreeze substance and extracting the antifreeze substance from the dried plant. The second method for producing a plant extract containing an antifreeze substance according to the present invention comprises the steps of extracting the antifreeze substance from a plant, and treating the obtained extract from the extracting step with an adsorbent.

## Description

### TECHNICAL FIELD

The present invention relates to a plant extract containing an antifreeze substance and a method for producing the plant extract.

### BACKGROUND ART

As a cryoprotective substance in a living body, antifreeze substances produced by a plant, fish, an insect, fungi, bacteria and the like are already found. The antifreeze substances are thought to be useful in various uses for protection against frost damage, quality improvement of frozen foods, preservation of living materials such as a cell and a tissue, cryosurgery and others.

As an organism having an antifreeze substance, for example, a gramineous plant (Non-Patent Documents 1 to 3) and a cruciferous plant such as Japanese radish (Patent Documents 1 to 3) are known. However, the antifreeze substance Contained in the plants is small in amount; therefore, the antifreeze substance has a problem in the production method and it is difficult to put the antifreeze substance to practical use. In addition, an antifreeze substance derived from fish such as cottidae fish and an insect such as a larva of darkling beetle are known (Non-Patent Documents 4 to 6 and Patent Document 4). However, industrial production of the antifreeze substance derived from fish or an insect is difficult. This is because of problems of the difficulty in collecting a large population required for bulk preparation and high cost required for purification due to the hard skeleton of fish and an insect.

As described above, the previously reported plants, fish, insects, fungi, bacteria and others containing an antifreeze substance have a problem that the organisms contain an antifreeze substance only in a minute amount in the living bodies and thus the extraction efficiency is very low. Even if the above-mentioned organism contains a large amount of an antifreeze substance, capture or culture of the organisms is difficult. Accordingly, it is impossible to industrially produce an antifreeze substance from the above-described organisms for use in food application. As to the antifreeze substance derived from fish or an insect, some documents report that productivity can be improved by use of a genetic recombination technology (Patent Documents 5 and 6). However, there is a need for a more simple and efficient method that is capable of providing an antifreeze substance inexpensively without using such a genetic recombination technology.

As a method for obtaining an objective antifreeze substance by removing unwanted substance from a composition containing an antifreeze substance, a fractionation method by ultrafiltration (Patent Documents 7 and 8), a purification method by various chromatography (Patent Documents 2 and 8) and a fractionation method using an organic solvent (Patent Documents 2 and 9) are reported. However, the methods have problems that the methods requires high cost due to the necessity of special facility and equipment, and that the fractionation by ultrafiltration or chromatography especially takes a long time to be completed.

### PRIOR ART

### PATENT DOCUMENT

Patent Document 1: JP2001-245659A
Patent Document 2: JP2003-250473A
Patent Document 3: JP2007-169246A
Patent Document 4: WO99/00493
Patent Document 5: WO92/16618
Patent Document 6: WO97/28260
Patent Document 7: JP2004-275008A
Patent Document 8: JP2008-120745A
Patent Document 9: JP2006-225315A

### NON-PATENT DOCUMENT

Non-Patent Document 1: Plant Physiology, 1994, 104, 971-980
Non-Patent Document 2: Physiologia Plantarum, 1997, 100, 327-332
Non-Patent Document 3: Plant Physiology, 1999, 119, 1361-1369
Non-Patent Document 4: Can. J. Zool., 1988, 66, 403-408
Non-Patent Document 5: The Journal of Biological Chemistry, 1986, 261, 15690-15695
Non-Patent Document 6: FEBS Letters, 1997, 402, 17-20

### DISCLOSURE OF THE INVENTION

### PROBLEMS TO BE SOLVED BY THE INVENTION

The objective to be solved by the present invention is to provide an antifreeze substance which is suitable for practical use and has excellent antifreeze activity in a safe process applicable to food production in a simple, efficient and inexpensive manner.

### MEANS FOR SOLVING THE PROBLEMS

The present inventors did research very hard to solve the above-described problems. As a result, the inventors found that the antifreeze activity of a plant containing an antifreeze substance can be remarkably improved by drying the plant as well as that the purification degree of an antifreeze substance can be remarkably improved by treating a plant extract fluid containing an antifreeze substance with an adsorbent so as to selectively remove unwanted matter from the extract fluid, and thus completed the present invention.

The first method for producing a plant extract containing an antifreeze substance according to the present invention comprises the steps of drying a plant containing the antifreeze substance, and extracting the antifreeze substance from the dried plant.

The second method for producing a plant extract containing an antifreeze substance according to the present invention comprises the steps of extracting the antifreeze substance from a plant, and treating the obtained extract from the extracting step with an adsorbent.

The plant extract according to the present invention is obtained by the above first method or second method according to the present invention, and exhibits an antifreeze activity.

The antifreeze substance composition according to the present invention contains the above plant extract or a dry substance of the above plant extract.

### MODE FOR CARRYING OUT THE INVENTION

The first method for producing a plant extract containing an antifreeze substance according to the present invention comprises the steps of drying a plant containing the antifreeze substance; and extracting the antifreeze substance from the dried plant. Hereinafter, the method is described with respect to each step.

### (1) Drying step

The drying step of the present invention can remarkably improve the activity of an antifreeze substance of a plant. The fact that a plant extract solution having more excellent antifreeze activity can be obtained by drying a plant before extracting an antifreeze substance therefrom is a novel finding that has never been reported.

In the present invention, an antifreeze substance refers to a substance having a function to inhibit the growth of ice crystal. The antifreeze substance is not particularly limited to the following definition, but is an extract containing protein derived from a plant, and has antifreeze activity defined by a publicly known method such as measurement of thermal hysteresis, observation of ice crystal structure, determination of inhibition of ice recrystallization and others. The antifreeze substance according to the present invention may be either a single compound or a mixture of a plurality of compounds.

The plant used in the method of the present invention is not particularly limited as long as the plant contains an antifreeze substance. The example of the plant includes a cruciferous plant, an apiaceous plant, a liliaceous plant and an asteraceous plant. The example of the cruciferous plant includes Chinese cabbage, Japanese radish, broccoli, bok choy, Japanese mustard spinach, turnip, shirona (Brassica campestris var. amplexicaulis), nozawana (Brassica rapa var. hakabura), hiroshimana (Brassica campestris var. amplexicaulis), mizuna (Brassica japonica) and mustard (Brassica juncea). The Example of the apiaceous plant includes carrot. The example of the liliaceous plant includes green onion. The example of the asteraceous plant includes garland chrysanthemum. Among the examples, a cruciferous plant is preferable, and Brassica juncea is particularly preferable. It is also possible to appropriately use similar varieties and improved varieties of the plants.

The form of the plant to be subjected to drying is not particularly limited, and may be an entire plant body or a part of a plant body, such as a germ, a leaf and a leafstalk. The plant may also be subjected to process such as grinding and shredding. Furthermore, it is also possible to appropriately induce an antifreeze substance in a plant by a publicly known method such as cold acclimation before drying the plant, as described later.

The plant according to the present invention is not particularly limited, but the plant is preferably used in the state of a sprout. In the present invention, the term "sprout" refers to a burgeon of a plant. For example, a burgeon of radish, broccoli, mustard (Brassica juncea), cress, red cabbage, kale and the like; Japanese radish sprout; and a bean sprout can be suitably used.

In the method of the present invention, an antifreeze substance in a plant may be induced by, for example, a step of cold-acclimating the plant before the drying step. The temperature for cold acclimation is not particularly limited, but is preferably not less than 0°C and not more than 20°C. The duration time for the cold acclimation is also not particularly limited, but is preferably not less than 1 day, and more preferably not less than 3 days. The upper limit of the duration time for cold acclimation period is not particularly limited, but is preferably not more than 30 days, more preferably not more than 20 days, and even more preferably not more than 15 days, since too long time may impair production efficiency.

The method of drying treatment is not particularly limited, and a freeze-drying method, a through-flow drying method, a reduced-pressure drying method including a vacuum drying method, a steam drying method, a high-frequency drying method, and combinations thereof may be used. Among the methods, a freeze-drying method and a through-flow drying method are preferable. As a through-flow drying method, warm air drying or hot air drying is particularly preferable.

The temperature of the drying treatment is not particularly limited, but the treatment is preferably carried out at a temperature of -80°C or higher and 160°C or lower. More specifically, the temperature can be appropriately adjusted depending on the drying method. For example, the temperature for through-flow drying is not particularly limited, but is preferably not less than 0°C, more preferably not less than 4°C, further preferably not less than 10°C, even more preferably not less than 15°C, most preferably not less than 20°C, and preferably not more than 160°C, more preferably not more than 150°C, further preferably not more than 140°C, even more preferably not more than 130°C, most preferably not more than 120°C, from the viewpoint of stability of the antifreeze substance in a plant and attainment of an economical treatment.

The drying time is not particularly limited and may be appropriately adjusted depending on the kind of the plant to be used, the drying method and the like within the range where a plant extract exhibiting more excellent antifreeze activity can be obtained. The drying time may be usually not less than 15 minutes and not more than 72 hours, preferably not less than 30 minutes and not more than 48 hours, and further preferably not less than 1 hour and not more than 24 hours.

In the method of the present invention, a dried plant may be directly subjected to the subsequent extraction step, or ground or shredded after the drying.

### (2) Extraction step

Next, the antifreeze substance whose activity is improved in the plant by the above-described drying step is extracted.

A solvent used for extracting an antifreeze substance from a dried plant is not particularly limited, and the preferred example thereof includes water, an organic solvent, supercritical carbon dioxide and subcritical water. The example of an organic solvent includes ethyl acetate, methanol, ethanol and hexane, and a solvent usable for food processing such as ethanol is preferable. Among the solvents, water and ethanol are preferable, and water is more preferable. It is also possible to use a solvent obtained by mixing water with an organic solvent, such as a mixed solvent of water and ethanol. In the present invention, a buffer solution such as a sodium acetate buffer solution is included in water.

When water is used, hot water is preferably used. When an organic solvent is used, a heated organic solvent is preferably used. The temperature of such a hot water or heated organic solvent is not particularly limited, but is preferably not less than 0°C and not more than 160°C, and more preferably not less than 20°C and not more than 120°C. The kind and amount of extraction solvent can be appropriately selected depending on the kind and amount of a plant body subjected to extraction.

The form of the obtained extract differs depending on the extraction solvent and the like. For example, an extract obtained using supercritical carbon dioxide is in a solid form, and an extract obtained using water or an organic solvent is in a liquid form. An extract solution may be made into a solid by removing the solvent through concentration under reduced pressure or the like.

### (3) Adsorbent treatment step

The extract containing an antifreeze substance obtained through the above-described steps may be further treated with an adsorbent. The specific conditions of the treatment are described later in the explanation of the second method.

The second method for producing a plant extract containing an antifreeze substance according to the present invention comprises the steps of extracting the antifreeze substance from a plant, and treating the obtained extract from the extracting step with an adsorbent.

### (1') Extraction step

In the second method according to the present invention, an antifreeze substance is extracted from a plant. The specific conditions of extraction may be the same as those in the explanation of the first method. A step of drying a plant may be carried out before the extraction step similarly to the first method, and a cold acclimation step may be further carried out before the drying step.

### (2') Adsorbent treatment step

In the second method according to the present invention, the amount of impurities other than an antifreeze substance is reduced by contacting the extract obtained in the extraction step with an adsorbent. Such a treatment with an adsorbent can selectively remove unwanted matter from the plant extract solution and remarkably improve the purification degree of the required antifreeze substance. Furthermore, since the unwanted matter to be removed includes a pigment component and an aroma component that are contained in many plant extracts, such a treatment is also expected to have an effect of decolorizing and deodorizing a plant extract.

When the extract is a liquid, the extract may be directly contacted with the adsorbent, or concentrated or diluted in advance. When the extract is solid, the extract is appropriately dissolved or dispersed in water, an organic solvent, a mixed solvent of water and an organic solvent or the like.

The adsorbent to be used is not particularly limited, and the example thereof includes an organic adsorbent such as a synthetic adsorbent, a cation exchange resin, an anion exchange resin, a crosslinked dextran derivative, a polyvinyl resin, an agarose derivative and a cellulose derivative; an inorganic adsorbent such as activated carbon, silica gel, alumina, zeolite, sepiolite, diatomaceous earth and white clay (active white clay, acidic white clay); a lipophilic synthetic resin; cotton cellulose; recycled cotton; silica sand; and sea sand.

A synthetic adsorbent is classified into an aromatic synthetic adsorbent, a substituted aromatic synthetic adsorbent, an acrylic synthetic adsorbent and the like depending on the raw material. A synthetic adsorbent can be exemplified by an aromatic synthetic adsorbent such as Sepabeads (registered trademark) SP850 and Diaion (registered trademark) HP20 (both manufactured by Mitsubishi Chemical Corporation), and Amberlite (registered trademark) XAD-4, XAD-16, XAD-1180 and XAD-2000 (all manufactured by Organo Corporation) ; a substi tuted aromatic synthetic adsorbent including Sepabeads SP205, SP206 and SP207 (all manufactured by Mitsubishi Chemical Corporation) ; and an acrylic synthetic adsorbent including Diaion HP2MG (manufactured by Mitsubishi Chemical Corporation) and Amberlite XAD-7 (manufactured by Organo Corporation).

A cation exchange resin as an adsorbent can be exemplified by a resin having sulfonate ions as ion-exchange group, such as Amberlite CG-4000, CG-5000, CG-6000, CG-8000, IR-116, IR-118, IR-120B, IR-122, IR-124, XT-1007, XT-1009 and XT-1002 (all manufactured by Organo Corporation); and an acrylic resin or a methacrylic resin such as Diaion WK10 and WK20 (both manufactured by Mitsubishi Chemical Corporation).

An anion exchange resin as an adsorbent can be exemplified by a resin having secondary or tertiary amino groups or quaternary ammonium groups as ion-exchange group, such as Diaion WA10, WA20, WA30, WA21J and SA20A (all manufactured by Mitsubishi Chemical Corporation).

A crosslinked dextran derivative as an adsorbent can be exemplified by Sephadex (registered trademark) LH20 and LH60 (both manufactured by GE Healthcare Bio-Sciences).

A polyvinyl resin as an adsorbent can be exemplified by Toyopearl (registered trademark) HW-40 and 50 (both manufactured by Tosoh Corporation).

An agarose derivative as an adsorbent can be exemplified by Sepharose (registered trademark) CL, 4B and 6B (all manufactured by GE Healthcare Bio-Sciences).

A cellulose derivative as an adsorbent can be exemplified by Cellulofine (registered trademark) CL-90,GCL-300 and GCL-1000 (all manufactured by Seikagaku Corporation).

Activated carbon is classified into powdered activated carbon, pelletized activated carbon, granulated activated carbon, spherical activated carbon, fibrous activated carbon and the like depending on the shape. A raw material of activated carbon can be exemplified by a plant raw material such as wood powder, charcoal and coconut husk; a fossil raw material such as coal; and a synthetic resin raw material such as a phenol resin and a polyester resin. Various kinds of activated carbon are produced by carbonizing and activating the raw material. Activation is carried out by gas activation using water vapor, hydrogen chloride, carbon monoxide, carbon dioxide, oxygen or the like; chemical activation using an alkali, an acid or a salt; or the like. The activated carbon used in the present invention may be powdered activated carbon such as Taiko S, Taiko FC and Taiko K (all manufactured by Futamura Chemical Co., Ltd.), an activated carbon powder (manufactured by Wako Pure Chemical Industries, Ltd.) and others.

Both of publicly known silica gel and usually commercially available silica gel may be used. Slica gel having various shape is known, and the shape of silica gel is also not particularly limited. For example, Wakogel C-100, C-200 and C-300 (all manufactured by Wako Pure Chemical Industries, Lid.) can be used.

Zeolite is a generic name of aluminosilicates having micropores in the crystal. Zeolite can be exemplified by a natural zeolite such as X-type zeolite, Y-type zeolite and mordenite; and a synthetic zeolite such as A-type zeolite, faujasite-type zeolite and sodalite-type zeolite. Both of publicly known zeolite and usually commercially available zeolite may be used.

Sepiolite is a chain clay mineral mainly made from a hydrous magnesium silicate, and has an adsorption capacity and a deodorizing capacity due to the characteristic chain-like crystal structure having a tunnel in the crystal. Both of publicly known sepiolite and usually commercially available sepiolite may be used.

Diatomaceous earth is a sediment of fossils of diatom, that is, a kind of algae, and is a porous material mainly made from silicon dioxide. Both of publicly known diatomaceous earth and usually commercially available diatomaceous earth may be used.

White clay such as active white clay and acidic white clay has a crystal structure made of three layers of a silica layer, an alumina layer and a silica layer, and has a cation exchange capacity and an adsorption capacity. Both of publicly known white clay and usually commercially available white clay may be used.

Lipophilic synthetic resin can be exemplified by polyethylene, polypropylene, polyester, polyurethane, polyvinyl chloride, polyacrylate and polycarbonate resin. Both of a publicly known lipophilic synthetic resin and a usually commercially available lipophilic synthetic resin may be used.

As to cotton cellulose, recycled cotton, silica sand and sea sand, both of a publicly known one and a usually commercially available one may be used.

The adsorbent preferably has a property that the affinity with the antifreeze substance in the extract solution is low and the adsorptivity to other component in the extract solution is high. A preferred example of such an adsorbent is activated carbon, and powdered activated carbon is particularly preferable from the viewpoint of operability upon, for example, mixing with the extract solution.

The amount of the adsorbent to be added may be appropriately determined depending on the solid content and protein amount in the plant extract solution, the kind of the solvent, the kind of the adsorbent and the like. The amount is not particularly limited, and is, for example, preferably not less than 0.001 parts by weight, more preferably not less than 0.01 parts by weight, further preferably not less than 0.1 parts by weight, and preferably not more than 100 parts by weight, more preferably not more than 80 parts by weight, further preferably not more than 50 parts by weight, relative to 1 part by weight of the protein in the extract. If the ratio is less than 0.001 parts by weight, unwanted matter may not be removed sufficiently, whereas if the ratio exceeds 100 parts by weight, there may be a problem that the recovery rate of the solution after the treatment is low. Therefore, such too low and too high ratios are not preferred.

The contact of the extract with the adsorbent may be carried out by any method. For example, the method may be a batch method of adding the adsorbent to the extract and removing the adsorbent after a predetermined time, or a column method of filling the adsorbent into a column and passing the extract therethrough. As described above, when the extract is a liquid, the extract may be directly contacted with the adsorbent, whereas when the extract is solid, the extract may be contacted with the adsorbent after being made into a solution or a dispersion.

The duration time of contact between the extract and the adsorbent, the number of adsorption treatment and the like may be appropriately adjusted depending on the protein contained in the extract, the antifreeze activity of the extract and the like.

The plant extract produced by the above-described method of the present invention has antifreeze activity.

The plant extract according to the present invention that has antifreeze activity can be utilized for the purpose of suppressing obstacles caused by ice crystallization of water in various fields where such obstacles are present. The plant extract can be utilized, for example, in the fields of foods, machinery, civil engineering, cosmetics, and medicine that uses living material.

In the field of foods, it is possible to prevent the degradation of taste and others by suppressing ice crystallization of water contained in a food. For example, it is possible to prevent aging of starch, and to suppress the degradation of taste or quality of a food caused by physical pressure due to ice-crystallized water in the food on protein, oil and fat component and the like, and a consequent change in the food structure.

In the fields of machinery and civil engineering, the plant extract according to the present invention can be utilized as a cryoprotective agent for movable part of machinery, road, ground and the like.

In the field of cosmetics, the plant extract according to the present invention can be utilized as an additive for preventing quality degradation of cosmetics and others. For example, when a cosmetic containing oil and fat component is frozen for cryopreservation, water contained in the cosmetic may ice-crystallize to physically press the oil and fat component and destroy the structure, whereby the quality and sense of use deteriorate. Therefore, cryopreservation of cosmetics is conventionally difficult. Meanwhile, by using the plant extract according to the present invention, the degradation of quality and the like can be suppressed, since ice crystallization of water is prevented and the structure of oil and fat component is maintained.

In the field of medicine, the plant extract according to the present invention can be utilized as a protestant in cryopreservation of living material. When a living material such as a cell, blood and a tissue like an organ is cryopreserved in a conventionally publicly known preservation solution, water in the preservation solution freezes to generate ice crystals that may damage the living material. Meanwhile, since the addition of the plant extract according to the present invention can suppress generation and growth of ice crystal, the living material can be protected from the damage caused by ice crystals.

The plant extract of the present invention can be used as it is, or may be further subjected to purification as necessary. For example, contaminant may be removed by decantation, filtration, centrifugal separation or the like. Alternatively, for example, precipitation by salting-out or by using an organic solvent, purification by affinity chromatography, ion-exchange column chromatography or gel filtration, or concentration by dialysis or ultrafiltration may be carried out. Furthermore, the plant extract of the present invention may be solidified into an arbitrary form such as a powder or a granule as necessary. The method of solidification is not particularly limited, and there are a method of powdering the extract with an ordinary method such as spray drying or freeze-drying, and a method of making an excipient adsorb or support the extract to solidify the extract into a powder or granular form. The methods are publicly known to the person skilled in the art and may be appropriately selected depending on the application.

The plant extract of the present invention can be used as it is, or may be used as an antifreeze substance composition that contains a plant extract or a dried plant extract. The form of the composition varies according to the application and may be a solution, a concentrated solution, a suspension, a freeze-dried product, a powder, a granule, a tablet or the like.

Next, a method of measuring the antifreeze activity of the plant extract according to the present invention and a method of measuring the protein amount are described.

As the method of measuring the antifreeze activity of the extract according to the present invention, a suitable method is appropriately selected depending on the kind of the plant and the like. For example, the measurement can be carried out by a publicly known method such as measurement of thermal hysteresis, observation of ice crystal structure or determination of inhibition of ice recrystallization. When an improvement in the antifreeze activity is recognized by any one method, the extract is deemed to be within the scope of the present invention. The measurement of the antifreeze activity can be carried out by, for example, cooling a plant extract solution containing 30 w/v% of sucrose to -40°C, heating the plant extract solution to -6°C, observing ice crystals with a microscope, and determining the average area of the ice crystals. Since the average area of the ice crystals decreases as the antifreeze activity is stronger, it is possible to quantitatively evaluate the antifreeze activity of plant extract using the average area as an indicator. In the present invention, the "antifreeze activity of a plant extract" that can be measured by this method refers to the antifreeze activity obtained from a solution containing 30 w/v% of sucrose prepared by adding water and sucrose to a solid remaining after removal of a solvent from a plant extract.

The antifreeze activity of the plant extract obtained by the first method according to the present invention can be measured by, for example, comparing the average area of ice crystals determined by the above-described method with the average area of ice crystals of a plant extract which is also determined by similarly treating the plant extract obtained by a production method similar to the first method except that the plant is not subjected to the drying step. As the plant extract obtained by the first method according to the present invention, preferable is a plant extract that gives an average area of ice crystals determined by the above-described method that is smaller by 5% or more than the average area of ice crystals determined by similarly treating a plant extract obtained by a production method similar to the first method except that the plant is not subjected to the drying step.

The method of measuring the protein amount in the extract of the present invention is not particularly limited, and the measurement can be carried out by a publicly known method such as a Lowry method, a bicinchoninic acid (BCA) method and a Bradford method (Coomassie method). A standard protein is not particularly limited, and bovine serum albumin (BSA) or the like can be suitably used.

### EXAMPLES

Hereinafter, the present invention is more specifically described with reference to examples. Of course, the present invention is not limited to the following examples and various variations on a detail are naturally possible. Furthermore, the present invention is not limited to the above-described embodiments and various modifications are possible within the scope of the claims. The embodiments obtained by appropriately combining the disclosed technical means are also within the scope of the present invention. In addition, all the patent documents and non-patent documents described herein are incorporated herein by reference.

### Example 1: Production of extract by extraction after drying

A commercially available mustard sprout (available from Murakami Farm Co., Ltd., 40 g) was frozen overnight in a freezer of -80°C and then dried in a freeze dryer (manufactured by Tokyo Rikakikai Co., Ltd., product number: FD-5N) to obtain a dry product (2.0 g) . Water (80 mL) was added to the dry product and the mixture was subjected to extraction under pressure of 0.12 MPa at 105°C for 20 minutes. The mixture was filtered through a filter paper (manufactured by Advantec MFS, Inc., captured particle diameter: 5 µm) and then the filtrate was dried under reduced pressure by a vacuum concentration apparatus (rotary evaporator manufactured by Tokyo Rikakikai Co., Ltd., product number: N-1000-S-W) to obtain an extract (820 mg). The extract was dissolved in water to make the concentration 100 mg/mL. The protein concentration of the solution was measured by BCA method using a BCA kit manufactured by Pierce; as a result, the concentration was 27.8 mg/mL.

### Example 2: Production of- extract by extraction after drying

The mustard sprout (40 g) used in Example 1 was put on a metal tray and warmly air-dried in a thermostatic dryer of 40°C to obtain a dry product (1.8 g). With the same method as Example 1, the dry product was subjected to extraction with hot water and the filtrate was concentrated to obtain an extract (920 mg). The extract was dissolved in water to make the concentration 100 mg/mL. The protein concentration of the solution was measured by a BCA method; as a result, the concentration was 25.4 mg/mL.

### Comparative Example 1

An extract (860 mg) was obtained by extraction under pressure of 0.12 MPa at 105°C for 20 minutes with the same method of Example 1 except that the mustard sprout (40 g) used in Example 1 was not dried and water (80 mL) was directly added thereto. The extract was dissolved in water to make the concentration 100 mg/mL. The protein concentration of the solution was measured by a BCA method; as a result, the concentration was 30.1 mg/mL.

### Example 3: Measurement of antifreeze activity

The aqueous extract solution obtained in Example 1, Example 2 or Comparative Example 1 was mixed with a 60 w/v% sucrose solution at a ratio of 1 : 1 (v/v) . The mixture (1 µL) was sandwiched between cover glasses. A glass petri dish of an optical microscope (manufactured by Olympus Corporation, BX50) with a heating/cooling stage (manufactured by Linkam Scientific Instruments, Ltd., LK-600PM) was kept at 20°C, and the cover glasses were put thereon and cooled to -40°C at a rate of 100°C/min. Then, the cover glasses were heated to-6°C at a rate of 100°C/min. The optical microscope was left as it was after the time point when the temperature reached -6°C (0 minute), and an image after 30 minutes was scanned. The average area of ice crystals present in the obtained image was calculated and regarded as an indicator of antifreeze activity. The results are shown in Table 1. Table 1 shows the results obtained by quantifying the average area of ice crystals in the image determined for each aqueous solution as a ratio to the average area of Comparative Example 1.

**Table 1**

| | Example 1 | Example 2 | Comparative Example 1 |
|---|---|---|---|
| Relative average area of ice crystal | 0.74 | 0.86 | 1 |

As shown in Table 1, as a result of measurement of antifreeze activity for the aqueous extract solutions of Examples 1 and 2 obtained by drying a mustard sprout and then extracting the dried sprout, the average area of ice crystals was smaller than that of the aqueous extract solution of Comparative Example 1. The smaller the average area of ice crystals is, the stronger the antifreeze activity is. It is clear from the results that the antifreeze activity of an antifreeze substance extracted from a mustard sprout is improved by freeze-drying and warm air drying at 40°C.

### Example 4: Production of extract by extraction after cold acclimation and drying

A commercially available mustard sprout was cold-acclimated at 15°C to induce an antifreeze substance. The mustard sprout (25 g) on the 10th day of cold acclimation was freeze-dried in the same manner as in Example 1 to obtain a dry product (1.3 g). Water (50 mL) was added to the dry product and the mixture was subjected to extraction under pressure of 0.12 MPa at 105°C for 20 minutes. The filtrate was dried to obtain an extract (330 mg). The extract was dissolved to make the concentration 100 mg/mL. The protein concentration of the solution was measured by a BCA method; as a result, the concentration was 26.6 mg/mL.

### Example 5: Production of extract by extraction after cold acclimation and drying

The mustard sprout (25 g) which was cold-acclimated as in Example 4 was put on a metal tray and warm air-dried at 40°C in the same manner as in Example 2 to obtain a dry product (1.2 g). Water (50 mL) was added to the dry product and the mixture was subjected to extraction under pressure of 0.12 MPa at 105°C and for 20 minutes. The filtrate was dried to obtain an extract (240 mg). The extract was dissolved to make the concentration 100 mg/mL. The protein concentration of the solution was measured; as a result, the concentration was 30.1 mg/mL.

### Example 6: Production of extract by extraction after cold acclimation and drying

The mustard sprout (25 g) which was cold-acclimated as in Example 4 was put on a metal tray and hot air-dried in a thermostatic dryer of 90°C to obtain a dry product (2.3 g) . Waster (50 mL) was added to the dry product and the mixture was subjected to extraction under pressure of 0.12 MPa at 105°C for 20 minutes. The filtrate was dried to obtain an extract (300 mg). The extract was dissolved to make the concentration 100 mg/mL. The protein concentration of the solution was measured by a BCA method; as a result, the concentration was 22.5 mg/mL.

### Comparative Example 2

Water (50 mL) was added to the mustard sprout (25 g) which was cold-acclimated as in Example 4 without a drying process, and the mixture was subjected to extraction under pressure of 0.12 MPa at 105°C for 20 minutes to obtain an extract (350 mg). The extract was dissolved in water to make the concentration 100 mg/mL. The protein concentration of the solution was measured by a BCA method; as a result, the concentration was 24.6 mg/mL.

### Example 7: Measurement of antifreeze activity

Antifreeze activity was measured for the aqueous extract solutions obtained in Examples 4, 5, 6 and Comparative Example 2 in the same manner as in Example 3. The average area of ice crystals in the obtained image was quantified as a ratio to the average area of ice crystals obtained for the aqueous extract solution of Comparative Example 2. The results are shown in Table 2.

**Table 2**

| | Example 4 | Example 5 | Example 6 | Comparative Example 2 |
|---|---|---|---|---|
| Relative average area of ice crystal | 0.62 | 0.59 | 0.92 | 1 |

As shown in Table 2, also in the case of cold-acclimating and then drying a mustard sprout, the average area of ice crystals in the aqueous extract solution obtained by extraction after drying (Examples 4 to 6) was smaller than the average area of ice crystals in the aqueous extract solution of Comparative Example 2 without a drying treatment. It is clear from the results that the antifreeze activity of an antifreeze substance in a mustard sprout is improved by inducing antifreeze activity by cold acclimation and then freeze-drying, warm air-drying or hot air-drying the mustard sprout.

### Example 8: Production of extract by extraction after cold acclimation and drying

A commercially available mustard sprout was cold-acclimated at 15°C to induce an antifreeze substance. The mustard sprout (50 g) on the 10th day of cold acclimation was put on a metal tray and warmly air-dried at 40°C in the same manner as in Example 2 to obtain a dry product (4.1 9). Water (100 mL) was added to the dry product and the mixture was subjected to extraction by heating at 50°C for 2 hours. The filtrate was dried to obtain an extract (800 mg). The extract was dissolved to make the protein concentration measured by a BCA method to be 10 mg/mL, in order to obtain an extract solution (22 mL).

### Comparative Example 3

Water (100 mL) was added to the mustard sprout (50 g) which was cold-acclimated as in Example 8 without a drying process, and the mixture was subjected to extraction with heat at 50°C for 2 hours to obtain an extract (880 mg). The extract was dissolved to make the protein concentration measured by a BCA method to be 10 mg/mL, in order to obtain an extract solution (26 mL).

### Example 9: Measurement of antifreeze activity

Antifreeze activity was measured for the extract solutions obtained in Example 8 and Comparative Example 3 in the same manner as in Example 3. The average area of ice crystals in the obtained image was quantified as a ratio to the average area of ice crystals obtained for the aqueous extract solution of Comparative Example 3. As a result, the value was 0.88 and the average area of ice crystals in the aqueous extract solution obtained by extraction after drying (Example 8) was smaller than the average area of ice crystals in the aqueous extract solution of Comparative Example 3 without a drying treatment. It is clear also from the results that the antifreeze activity of an antifreeze substance in a mustard sprout is improved by inducing antifreeze activity by cold acclimation and then drying the mustard sprout.

### Example 10: Production of extract by extraction after cold acclimation and drying, and additional adsorption treatment

Activated carbon (manufactured by Futamura Chemical Co. , Ltd., Taiko FC, 220 mg) was added to the extract solution (22 mL) obtained in Example 8 having a protein concentration of 10 mg/mL, and the mixture was shaken at 150 rpm for 30 minutes for mixing. The mixture was centrifuged with a centrifugal machine (manufactured by Hitachi High-Technologies Corporation, product number: CR22G) at 10,000 x g for 30 minutes to remove activated carbon, whereby a supernatant (19 mL) was obtained.

### Example 11: Measurement of protein concentration and antifreeze activity

The protein concentration of the extract solution obtained in Example 10 was measured by a BCA method. In addition, antifreeze activity was measured in the same manner as in Example 3. The results are shown in Table 3 in comparison to those of the extract solution of Example 8 which was not subjected to the activated carbon treatment. The values of antifreeze activity in Table 3 are relative values obtained by quantifying the average area of ice crystals in the image obtained for each solution as a ratio to the average area of ice crystals determined in the same manner by using water as a sample. The smaller the value is, the stronger the antifreeze activity is.

**Table 3**

| | Example 8 | Example 10 |
|---|---|---|
| Protein concentration (mg/mL) | 10 | 1.55 |
| Relative average area of ice crystal | 0.48 | 0.53 |

As shown in Table 3, about 86% of proteins in the solution was removed from an extract solution obtained by drying and extracting a mustard sprout and an additional treatment with activated carbon. Meanwhile, the average area of ice crystals hardly changed. This fact means that the antifreeze activity of the solution was maintained. It is clear from the results that an extract with a remarkably improved purification degree of an antifreeze substance can be obtained by drying and extracting a mustard sprout whose antifreeze activity is induced by cold acclimation, and further treating the extract solution with activated carbon.

### Example 12: Production of extract by extraction after cold acclimation and drying

A commercially available red cabbage sprout was cold-acclimated at 4°C to induce an antifreeze substance. The sprout (20 g) on the 4th day of acclimation was put on a metal tray and warmly air-dried at 40°C in the same manner as in Example 2 to obtain a dry product (0.8 g). Water (80 mL) was added to the dry product and the mixture was subjected extraction with heat at 50°C for 2 hours. The filtrate was dried to obtain an extract (389 mg). The extract was dissolved in water to make the concentration 100 mg/mL, in order to obtain an extract solution.

### Comparative Example 4

Water (80 mL) was added to the red cabbage sprout (20 g) which was cold-acclimated as in Example 12 without a drying process, and the mixture was subjected to extraction with heat at 50°C for 2 hours to obtain an extract (390 mg). The extract was dissolved in water to make the concentration 100 mg/mL, in order to obtain an extract solution.

### Example 13: Production of extract by extraction after cold acclimation and drying

A commercially available kale sprout was cold-acclimated at 4°C to induce an antifreeze substance. The sprout (20 g) on the 4th day of acclimation was put on a metal tray and warmly air-dried at 40°C in the same manner as in Example 2 to obtain a dry product (1.2g). Water (80 mL) was added to the dry product and the mixture was subjected to extraction with heat at 50°C for 2 hours. The filtrate was dried to obtain an extract (577 mg). The extract was dissolved in water to make the concentration 100 mg/mL, in order to obtain an extract solution.

### Comparative Example 5

Water (80 mL) was added to the kale sprout (20 g) which was cold-acclimated as in Example 13 without a drying process, and the mixture was subjected to extraction with heat at 50°C for 2 hours to obtain an extract (559 mg). The extract was dissolved in water to make the concentration 100 mg/mL, in order to obtain an extract solution.

### Example 14: Measurement of antifreeze activity

Antifreeze activity was measured for the aqueous extract solutions obtained in Examples 12 and 13 and Comparative Examples 4 and 5 in the same manner as in Example 3. The average area of ice crystals in the image obtained for the aqueous extract solutions of Examples 12 and 13 was respectively quantified as a ratio to the average area of ice crystals obtained for the aqueous extract solutions of Comparative Examples 4 and 5. The results are shown in Table 4.

**Table 4**

| | Example 12 | Example 13 |
|---|---|---|
| Relative average area of ice crystal | 0.93 | 0.64 |

As shown in Table 4, the average area of ice crystals in the aqueous extract solutions (Examples 12 and 13) obtained by extraction after drying was smaller than the average area of ice crystals in the aqueous extract solutions of Comparative Examples 4 and 5 without a drying treatment, respectively. It is clear from the results that the activity of an antifreeze substance in a sprout can be improved by inducing antifreeze activity by cold acclamation and then drying a sprout.

### Example 15: Production of extract by extraction after cold acclimation and additional adsorption treatment

### (1) Extraction after cold acclimation

A commercially available mustard sprout (available from Murakami Farm Co., Ltd.) was cold-acclimated at 15°C to induce antifreeze activity. Water (100 mL) was added to the mustard sprout (50 g) on the 10th day of acclamation and the mixture was subjected to extraction under pressure of 0.12 MPa at 105°C for 20 minutes. The extract was filtered through a filter paper (manufactured by Advantec MFS, Inc., captured particle diameter: 5 µm) and then the filtrate was concentrated under reduced pressure by a vacuum concentration apparatus (rotary evaporator manufactured by Tokyo Rikakikai Co., Ltd., product number: N-1000-S-W) The resulting concentrated solution was centrifuged with a centrifugal machine (manufactured by Hitachi High-Technologies Corporation, product number: CR22G) at 18,000 x g for 20 minutes to obtain a supernatant (80 mL). The protein concentration of the extract solution was measured by a Bradford method using a Protein Assay kit manufactured by Bio-Rad; as a result, the concentration was 1.04 mg/znL.

### (2) Adsorption treatment

The extract solution (10 mL) was poured into a 1.5-mL tube, and 12.5 mg, 25.0 mg or 50.0 mg of powdered activated carbon (manufactured by Futamura Chemical Co., Ltd., Taiko FC) was added thereto, and the mixture was stirred for mixing. As a control, the extract solution was stirred and mixed without adding activated carbon. Each of the mixtures was centrifuged with a centrifugal machine (manufactured by Hitachi High-Technologies Corporation, product number: CR22G) at 10,000 x g for 30 minutes to remove activated carbon and a supernatant of was obtained. The resulting supernatant was passed through a membrane filter (manufactured by Advantec MFS, Inc., cellurose acetate, diameter: 0.45 µm) and the resultant activated carbon-treated solution was subjected to the following protein concentration measurement and antifreeze activity measurement.

### Example 16: Measurement of protein concentration and antifreeze activity

As to each of the activated carbon-treated solutions and the control solution obtained in Example 15, the protein concentration was measured by a Bradford method.

In addition, antifreeze activity was measured by the following method. Each of the solutions obtained in Example 15 was mixed with a 60 w/v% sucrose solution at a ratio of 1 : 1 (v/v). The resulting mixed liquid (1 µL) was sandwiched between cover glasses. The temperature of a glass petri dish of an optical microscope (manufactured by Olympus Corporation, BX50) with a heating/cooling stage (manufactured by Linkam Scientific Instruments, Ltd., LK-600PM) was kept at 20°C, and the cover glasses were put thereon and cooled to -40°C at a rate of 100°C/min. Then, the cover glasses were heated to -6°C at a rate of 100°C/min. The optical microscope was left as it was after the time point when the temperature reached -6°C (0 minute), and an image after 30 minutes was scanned. The average area of ice crystals present in the obtained image was calculated and regarded as an indicator of antifreeze activity. The results are shown in Table 5. The values of antifreeze activity in Table 5 were figured out by calculating a relative value obtained by quantifying the average area of ice crystals in the image obtained for each solution as a ratio to the average area of ice crystals determined in the same manner by using a 30 w/v% sucrose solution, dividing the inverse number of the relative value regarded as an activity value by the protein concentration, and quantifying the divided value as a ratio to the activity value of the control. The larger the value is, the stronger the specific activity of the antifreeze substance is.

**Table 5**

| | | | | |
|---|---|---|---|---|
| Amount of activated carbon to be added (mg) | 0 (control) | 12.5 | 25.0 | 50.0 |
| Relative protein concentraion | 1 | 0.56 | 0.34 | 0.07 |
| Relative specific average area of ice crystal | 1 | 1.44 | 2.32 | 12.0 |

As shown in Table 1, the protein concentration of a mustard sprout extract solution remarkably decreased depending on the additive amount of activated carbon whereas the specific activity of an antifreeze substance remarkably increased. It is clear from the results that the purification degree of an antifreeze substance can be remarkably improved by treating a mustard sprout extract solution with activated carbon to remove unwanted matters in the solution without impairing an antifreeze activity.

### Example 17: Production of extract by extraction after cold acclimation and additional adsorption treatment

### (1) Extraction after cold acclimation

A commercially available mustard sprout was cold-acclimated at 15°C to induce an antifreeze substance. Water (100 mL) was added to the mustard sprout (50 g) on the 10th day of cold acclimation and the mixture was subjected to extraction under pressure of 0.12 MPa at 105°C for 20 minutes in the same manner as in Example 1. The obtained extract solution was concentrated by a vacuum concentration apparatus to remove water, whereby the solution was solidified to obtain an extract (880 mg). The solid extract was redissolved in water to make the protein concentration measured by a BCA method to be 10 mg/mL, in order to obtain an extract solution (26 mL).

### (2) Adsorption treatment

The extract solution (1.0 mL) was poured into a 1.5-mL tube, and 2.5 mg, 5.0 mg or 10.0 mg of activated carbon (manufactured by Futamura Chemical Co., Ltd., Taiko FC) was added thereto, and the mixture was stirred for mixing. As a control, the extract solution was stirred and mixed without adding activated carbon. Each of the mixtures was centrifuged at 10,000 x g for 30 minutes to remove activated carbon and a supernatant was obtained.

### Example 18: Measurement of protein concentration and antifreeze activity

As to each of the supernatants obtained in Example 17, the protein concentration was measured by a BCA method. In addition, antifreeze activity was measured in the same manner as in Example 16. The results are shown in Table 6. The values of protein concentration in Table 6 were obtained by quantifying the protein concentration as a ratio to the protein concentration obtained for the control solution. The values of antifreeze activity in Table 6 were figured out by calculating a relative value obtained by quantifying the average area of ice crystals in the image obtained for each solution as a ratio to the average area of ice crystals determined in the same manner by using a 30 w/v% sucrose solution, dividing the inverse number of the relative value regarded as an activity value by the protein concentration, and quantifying the divided value as a ratio to the activity value of the control. The larger the value is, the stronger the specific activity of the antifreeze substance is.

**Table 6**

| | | | | |
|---|---|---|---|---|
| Amount of activated carbon to be added (mg) | 0 (control) | 2.5 | 5.0 | 10.0 |
| Relative protein concentraion | 1 | 0.65 | 0.4 | 0.2 |
| Relative specific average area of ice crystal | 1 | 1.81 | 2.26 | 5.75 |

As shown in Table 6, the protein concentration of a mustard sprout extract solution largely decreased depending on the additive amount of activated carbon whereas the specific activity of an antifreeze substance increased. It is clear from the results that the purification degree of an antifreeze substance can be improved by treating a mustard sprout extract solution with activated carbon.

### Example 19: Production of extract by extraction after cold acclimation and additional adsorption treatment

The extract solution (1.0 mL) obtained in Example 17 (1) was poured into a 1.5-mL tube, and silica gel (manufactured by Wako Pure Chemical Industries, Ltd., Wakogel C-200, 200 mg) was added thereto, and the mixture was stirred for mixing. The silica gel was removed by centrifugal separation and the supernatant was obtained.

### Example 20: Production of extract by extraction after cold acclimation and additional adsorption treatment

The extract solution (1.0 mL) obtained in Example 17 (1) was poured into a 1.5-mL tube, and an acrylate synthetic adsorbent, Diaion HP2MG (manufactured by Mitsubishi Chemical Corporation, 200 mg), was added thereto, and the mixture was stirred for mixing. The adsorbent was removed by centrifugal separation and the supernatant was obtained.

### Example 21: Production of extract by extraction after cold acclimation and additional adsorption treatment

The extract solution (1.0 mL) obtained in Example 17 (1) was poured into a 1.5-mL tube, and a cation exchange resin, Diaion WK20 (manufactured by Mi tsubishi Chemical Corporation, 200 mg) was added thereto, and the mixture was stirred for mixing. The adsorbent was removed by centrifugal separation and the supernatant was obtained.

### Comparative Example 6

The extract solution (1.0 mL) obtained in Example 17 (1) was poured into a 1.5-mL tube and centrifuged in the same manner as in Examples 19 to 21, to obtain supernatant.

### Example 22: Measurement of protein concentration and antifreeze activity

The protein concentration of the supernatants obtained in Examples 19 to 21 and Comparative Example 6 was measured by a BCA method. In addition, antifreeze activity was measured in the same manner as in Example 16. The results are shown in Table 7. The values of protein concentration in Table 7 were obtained by quantifying the protein concentration as a ratio to the protein concentration obtained for the solution of Comparative Example 6. The values of antifreeze activity in Table 7 were figured out by calculating a relative value obtained by quantifying the average area of ice crystals in the image obtained for each solution as a ratio to the average area of ice crystals determined in the same manner by using a 30 w/v% sucrose solution, dividing the inverse number of the relative value regarded as an activity value by the protein concentration, and quantifying the divided value as a ratio to the activity value of Comparative Example 6. The larger the value is, the stronger the specific activity of the antifreeze substance is.

**Table 7**

| | Example 19 | Example 20 | Example 21 | Comparative Example 6 |
|---|---|---|---|---|
| Relative protein concentraion | 0.75 | 0.33 | 0.63 | 1 |
| Relative specific average area of ice crystal | 1.41 | 3.16 | 1.43 | 1 |

As shown in Table 7, the protein concentration of the mustard sprout extract solution largely decreased by the treatment with the adsorbents of Examples 19 to 21, whereas the specific activity of the antifreeze substance increased by the treatment with any of adsorbents. It is clear from the results that the purification degree of an antifreeze substance can be improved by treating a mustard sprout extract solution with adsorbents.

### INDUSTRIAL APPLICABILITY

The first production method of a plant extract containing an antifreeze substance according to the present invention enables efficient production of a plant extract exhibiting more excellent antifreeze activity and therefore, the method has an effect that a composition having excellent antifreeze activity can be provided. In addition, the second production method of a plant extract containing an antifreeze substance according to the present invention enables remarkable improvement in the purification degree of the antifreeze substance and therefore, the method has an effect that a composition having excellent antifreeze activity can be provided. Accordingly, by using the production method of the present invention, it is possible to provide an antifreeze substance suitable for practical use and having excellent antifreeze activity in a safe process flow applicable to food production in a simple, efficient and inexpensive manner.

## Claims

1. A method for producing a plant extract containing an antifreeze substance, comprising the steps of
drying a plant containing the antifreeze substance; and
extracting the antifreeze substance from the dried plant.

2. The production, method according to claim 1, wherein the plant is dried by freeze drying or through-flow drying.

3. The production method according to claim 1 or 2, wherein the plant extract is further treated with an adsorbent.

4. The production method according to any one of claims 1 to 3, wherein a sprout is used as the plant.

5. The production method according to any one of claims 1 to 4, wherein a cruciferous plant is used as the plant.

6. The production method according to claim 5, wherein Brassica juncea is used as the plant.

7. The production method according to any one of claims 1 to 6, wherein the antifreeze substance is extracted using water.

8. The production method according to any one of claims 1 to 7, further comprising the step of cold-acclimating the plant before drying the plant.

9. The production method according to claim 8, wherein the temperature of the cold acclimation is not less than 0°C and not more than 20°C.

10. The production method according to claim 8 or 9, wherein the step of the cold acclimation is carried for not less than 3 days.

11. A plant extract, wherein the plant extract is produced by the production method according to any one of claims 1 to 10 and has antifreeze activity.

12. The plant extract according to claim 11, wherein an average area of ice crystals measured using a microscope after cooling a plant extract solution containing 30 w/v% of sucrose to -40°C and heating the plant extract solution to -6°C is smaller by not less than 5% than an average area of ice crystals measured by the same manner except that the plant extract is not subjected to the drying step.

13. An antifreeze substance-containing plant extract composition, comprising the plant extract according to claim 11 or 12, or a dry substance of the plant extract according to claim 11 or 12.

14. A method for producing a plant extract containing an antifreeze substance, comprising the steps of
extracting the antifreeze substance from a plant; and
treating the obtained extract from the extracting step with an adsorbent.

15. The production method according to claim 14, wherein an activated carbon, an acrylic synthetic adsorbent, an acrylic cation exchange resin, a methacrylic cation exchange resin or a silica gel is used as the adsorbent.

16. The production method according to claim 14 or 15, wherein not less than 0.1 parts by weight of the adsorbent relative to 1 part by mass of a protein contained in the extract is used.

17. The production method according to any one of claims 1.4 to 16, wherein a sprout is used as the plant.

18. The production method according to any one of claims 14 to 17, wherein a cruciferous plant is used as the plant.

19. The production method according to claim 18, wherein Brassica juncea is used as the plant.

20. The production method according to any one of claims 14 to 19, wherein the antifreeze substance is extracted with water.

21. The production method according to any one of claims 14 to 20, further comprising the step of cold-acclimating the plant before drying the plant.

22. The production method according to claim 21, wherein the temperature of the cold acclimation is not less than 0°C and not more than 20°C.

23. The production method according to claim 21 or 22, wherein the step of the cold acclimation is carried for not less than 3 days.

24. A plant extract, wherein the plant extract is produced by the production method according to any one of claims 14 to 23 and has Antifreeze activity.

25. An antifreeze substance-containing plant extract composition, comprising the plant extract according to claim 24, or a dry substance of the plant extract according to claim 24.
